# EUROPÄISCHE PATENTANMELDUNG

(11) **EP 0 692 889 A1**
(43) Veröffentlichungstag der Anmeldung: **17.01.1996**
(21) Anmeldenummer: 95100525.5
(22) Anmeldetag: 17.01.1995
(51) Int. Cl.: H04H 1/00, H04H 3/00

(54) **Verfahren, Sender und Empfänger zur Übertragung und Auswahl lokaler Rundfunkprogramme in einem Gleichwellennetz**

(30) Priorität: 14.07.1994 DE 4424778
(71) Anmelder: GRUNDIG E.M.V. Elektro-Mechanische Versuchsanstalt Max Grundig GmbH & Co. KG, D-90762 Fürth (DE)
(72) Erfinder: Zumkeller, Markus, GRUNDIG E.M.V., D-90762 Fürth (DE)

(57) **Zusammenfassung**

Es ist bekannt Rundfunkprogramme über ein Gleichwellennetz auszusenden. Dabei wird durch den beispielsweisen landesweiten Gleichwellenbetrieb der Rundfunksender eine besonders gute Nutzung der Übertragungsbandbreite erreicht.

Das neue Verfahren ermöglicht es nun bei einer Hörfunkübertragung einen Stereo-Übertragungskanal in zwei Mono-Übertragungskanäle aufzuteilen und diese nur durch bestimmte Sender mit einem Programm zu belegen. Zusätzlich wird im gesamten Gleichwellennetz eine Information übertragen, daß der benutzte Stereo-Übertragungskanal in zwei Mono-Übertragungskanäle aufgeteilt ist. Durch diese Information wird ein auf diesen Übertragungskanal synchronisierter Empfänger automatisch auf eine Mono-Auswertung des Empfangssignals umgeschaltet. Regional kann zusätzlich übertragen werden, welcher der beiden Mono-Übertragungskanäle empfangen werden kann. Alternativ kann der Empfänger oder der Benutzer selbst einen Mono-Übertragungskanal zum Empfang auswählen.

Das erfindungsgemäße Verfahren kann bei allen Übertragungsverfahren im Gleichwellenbetrieb eingesetzt werden.

## Beschreibung

Die Erfindung betrifft ein Verfahren zur Übertragung lokaler Rundfunkprogramme nach dem Oberbegriff des Patentanspruchs 1, einen Sender für dieses Verfahren nach Anspruch 6, ein Verfahren zum Empfang lokaler Rundfunkprogramme nach Anspruch 8 und einen Empfänger für dieses Verfahren nach Anspruch 9.

Es wird seit einigen Jahren ein terrestrisches digitales Übertragungsverfahren entwickelt, das auch bei einem mobilen Empfänger eine gleichbleibend hohe Übertragungsqualität, vergleichbar der bei digitalen Aufzeichnungen, sowie eine verbesserte Frequenzökonomie bieten soll. Bei den unter den Bezeichnungen DAB (Digital Audio Broadcasting) für Hörfunk bzw. DVB (Digital Video Broadcasting) für Video-Übertragung bekannten Verfahren werden die Übertragungsdaten in einem Gleichwellennetz ausgestrahlt. Dadurch wird eine besonders gute Ausnutzung der Übertragungsfrequenzen erreicht.

Aus der WO 88/00417 A3 ist das dabei benutzte Übertragungsverfahren zur Codierung und Modulation der Daten bekannt. Diese werden zunächst unter Hinzufügen von Fehlerschutzcode codiert, um Übertragungsfehler wieder verbessern zu können. Anschließend erfolgt die Modulation. Dabei wird eine Vielzahl Trägerfrequenzen mit dem zu übertragenden Signal phasenmoduliert und die Trägerfrequenzen sowohl im Zeit- als auch im Frequenzbereich verwürfelt, um eine erhöhte Störsicherheit des Übertragungsverfahrens zu erreichen.

Dieses Übertagungsverfahren weist jedoch den Nachteil auf, daß alle im Gleichwellennetz übertragenen Informationen absolut identisch sein müssen. Da ein Gleichwellennetz, entsprechend bestehender Planungen, voraussichtlich landesweit ausstrahlen würde, wäre es dann nicht mehr möglich Informationen nur regional zu übertragen.

Dieser Nachteil wird durch das in der DE 42 22 877 C2 beschriebene Verfahren beseitigt. Darin wird ein Verfahren zur Übertragung regional unterschiedlicher Informationen in einem Gleichwellennetz offenbart. Gemäß diesem Verfahren werden in Zeitschlitzen, die nicht durch ein Gleichwellensignal belegt sind, mittels der auch in den anderen Zeitschlitzen benutzten Trägerfrequenzen Daten übertragen. Im Unterschied zum Gleichwellenbetrieb werden diese Daten jedoch im Frequenzmultiplex auf für jeden Sender unterschiedlichen Trägerfrequenzen ausgestrahlt, wie dies bisher bei der UKW-Übertragung üblich ist. Somit werden im Prinzip zwei unterschiedliche Übertragungsverfahren im Zeitmultiplex angewandt. Dadurch wird es möglich den weitaus größten Anteil der Übertragungsdaten im frequenzökonomischen Gleichwellenbetrieb und einen kleinen Teil der Daten, der nur lokal von Interesse ist, im Frequenzmultiplex der Sender auszusenden.

Dabei ist von Nachteil, daß die Übertragungskapazität für lokale Rundfunksender nicht ausreichend ist, da nur ein relativ kleiner Zeitschlitz gemäß dem COFDM-Verfahren nicht durch Signale des Gleichwellennetzes belegt ist.

Aus der DE 42 37 692 C1 ist ein Empfänger für ein digitales Rundfunksignal bekannt, der durch eine besonders günstige Schaltungsanordnung realisiert wird. Bei diesem Empfänger wird durch die Umschaltung eines Allpaßfilters das Empfangssignal in reelle und imaginäre Signalkomponenten aufgeteilt und gleichzeitig in eine Zwischenfrequenzlage heruntergemischt. Dadurch liegen die reellen und imaginären Signalkomponenten im Zeitmultiplex vor und es werden die Baugruppen im Empfänger eingespart, die herkömmlicherweise für eine parallele Verarbeitung von reellem und imaginärem Anteil des Empfangssignals benötigt werden.

Aus der DE 42 23 194 C1 ist ein Verfahren und eine Schaltungsanordnung zur Bestimmung des geographischen Standortes eines Empfängers in einem Gleichwellennetz bekannt. Dabei wird das von verschiedenen Sendern phasenstarr gekoppelte Übertragungssignal im Empfänger zur Bildung von Schwebungsfrequenzen überlagert. Der Phasenunterschied mehrerer Schwebungsfrequenzen verschiedener Sender ermöglicht anschließend die Standortbestimmung des Empfängers nach einem der bekannten Hyperbel-Ortungsverfahren Decca oder Loran-C.

Aus der DE 43 41 211 ist ein Verfahren und eine Schaltungsanordnung zum Einfügen von Daten in ein Übertragungssignal bekannt. Hierbei werden in einem Sender für ein Gleichwellennetz nur regional übertragene Informationen in ein DAB-Übertragungssignal frequenz- und zeitsynchron eingefügt. Dadurch ist es möglich über Sender eines Gleichwellennetzes, deren Übertragungssignale normalerweise absolut identisch sind, regional unterschiedliche zusätzliche Informationen auszusenden.

Aus der DE 43 14 045 ist ein Verfahren zur Übertragung digitaler, komprimierter Audio- und/oder Videosignale bekannt, wobei die Audio- und/oder Videosignale einem oder mehreren Rundfunkprogrammen zugeordnet sind. Der über den Übertragungskanal übertragene digitale Datenstrom wird in mehrere Teildatenströme aufgeteilt. Die Teildatenströme werden im Frequenz- und/oder Zeitmultiplex übertragen.

Die Aufgabe der Erfindung ist es, ein neues Verfahren und eine neue Schaltungsanordnung für Sender und Empfänger anzugeben, die es ermöglichen Rundfunkprogramme in einem Gleichwellennetz nur lokal auszusenden und zu empfangen. Weiterhin soll es möglich sein, schnell zwischen Rundfunkprogrammen zu wechseln.

Diese Aufgaben werden erfindungsgemäß durch die in den Patentansprüchen 1, 6, 8 und 9 angegebenen Merkmale gelöst.

Das erfindungsgemäße Verfahren weist den Vorteil auf, daß die Möglichkeit besteht einen Übertragungskanal in Teil-Übertragungskanäle aufzuteilen. Das über die Teil-Übertragungskanäle übertragene Programm kann über alle oder ausgewählte Sender ausgesendet werden. Weiterhin erfolgt im Empfänger automatisch eine Umschaltung der Decodierung in Abhängigkeit von der im Informationskanal übertragenen Kennung. Aufgrund dieser zusätzlich gesendeten Kennung erkennt der Empfänger, ob der gerade empfangenen Übertragungskanal in Teil-Übertragungskanäle aufgeteilt ist oder nicht.

Das Verfahren nach Anspruch 2 weist den Vorteil auf, daß das Verbreitungsgebiet eines lokalen Rundfunkprogramms eingeschränkt werden kann. Dadurch kann nicht der Fall eintreten, daß der Empfänger, beispielsweise nach einem Suchlauf, ein lokales Rundfunkprogramm wiedergibt, das lokale Nachrichten einer weit entfernten Region überträgt. Weiterhin ist es dadurch möglich, daß Übertragungskanäle mehrfach belegt werden, wenn der Abstand zwischen Sendern, die diese nutzen, groß genug ist.

Das Verfahren nach Anspruch 3 weist den Vorteil auf, daß im Steuerkanal FIC (Fast-Information-Channel), in dem Steuerdaten zum Empfänger übertragen werden, eine Kennung übertragen wird, um den Übertragungskanal zu kennzeichnen, der in Teil-Übertragungskanäle aufgeteilt ist. Dadurch werden aufwendige und zeitintensive Auswerteverfahren zur Erkennung, welcher Übertragungskanal benutzt wird bzw. welcher decodiert werden darf, vermieden. Weiterhin ermöglicht die Information, daß einem Empfänger in Abhängigkeit von seinem Standort ein bestimmter Teil-Übertragungskanal zugewiesen wird. Auf diese Weise ist eine Begrenzung des Verbreitungsgebietes eines lokalen Rundfunkprogramms möglich.

Das Verfahren nach Anspruch 4 weist den Vorteil auf, daß die Kennung, welcher Übertragungskanal in, Teil-Übertragungskanäle aufgeteilt ist, im Gleichwellenbetrieb übertragen wird. Dadurch wird keine Übertragungskapazität der regional übertragenen Information im Null-Symbol benötigt. Die von Sender zu Sender unterschiedliche Information wird entsprechend mit den regional unterschiedlichen Informationen übertragen. Somit wird eine optimale Frequenzökonomie erreicht, da die Informationen, die im gesamten Gleichwellennetz übertragen werden im Gleichwellenbetrieb und die, die sich unterscheiden, im Frequenzmultiplex übertragen werden.

Das Verfahren nach Anspruch 5 weist den Vorteil auf, daß ein schneller Wechsel des empfangenen Rundfunkprogramms im Empfänger möglich ist, was besonders beim Empfang von auf kleine Regionen beschränkten Rundfunkprogrammen erforderlich ist. Dadurch können Wartezeiten bei einem neuen Suchlauf vermieden werden.

Der Sender nach Anspruch 6 weist die für obiges Verfahren erforderlichen Baugruppen auf. Diese dienen dazu die über die Teil-Übertragungskanäle übertragenen Rundfunkprogramme nach einem im Empfänger bekannten Verfahren zu verwürfeln, wodurch eine erhöhte Störresistenz erreicht wird. Weiterhin ist eine Schaltung vorgesehen, die die lokalen Rundfunkprogramme in das Übertragungssignal zeit- und frequenzsynchron einfügt. Es ist eine Schaltung zur Erzeugung einer speziellen Kennung vorgesehen, durch die der Übertragungskanal gekennzeichnet wird, der in Teil-Übertragungskanäle aufgeteilt wird. Gleichzeitig wird durch die Kennung übertragen, welcher der Teil-Übertragungskanäle in welcher Region empfangen werden kann oder darf.

Der Sender nach Anspruch 7 weist den Vorteil auf, daß er eine Schaltung aufweist, die ein Steuersignal für die Synchronisation des Empfängers erzeugt, wodurch dieser sich automatisch auf den richtigen Teil-Übertragungskanal synchronisiert.

Das Verfahren zum Empfang lokaler Rundfunkprogramme gemäß Anspruch 8 weist den Vorteil auf, daß die übertragene Kennung sowie die Steuerinformation zur Synchronisation des Empfängers auf einen der Teil-Übertragungskanäle ausgewertet wird und dadurch der Empfang von mehreren Rundfunkprogrammen in einem Übertragungskanal ermöglicht wird.

Der Empfänger nach Anspruch 9 weist den Vorteil auf, daß eine Steuereinheit den Empfänger abhängig von dem Übertragungskanal, auf den er synchronisiert ist, derart steuert, daß der Empfang mehrerer Rundfunkprogramme, übertragen in mehreren Teil-Übertragungskanälen, möglich ist.

Der Empfänger nach Anspruch 10 weist den Vorteil auf, daß einer der Teil-Übertragungskanäle und damit eines der Rundfunkprogramme automatisch ausgewählt wird. Hierzu stehen verschiedene Möglichkeiten offen. Um das Verbreitungsgebiet eines Rundfunkprogramms zu begrenzen, wird vorteilhaft mit der im Steuerkanal übertragenen Information dem Empfänger ein Teil-Übertragungskanal zugewiesen. Alternativ kann auch durch eine Schaltungsanordnung die Empfangsfeldstärke im Empfänger selbst ausgewertet und dann entschieden werden, ob ein Teil-Übertragungskanal noch eine ausreichende Übertragungsqualität aufweist. Eine weitere Möglichkeit besteht darin, daß der Empfänger seinen geographischen Standort kennt, diesen mit einer vom Sender übertragenen Information bezüglich dessen Standorts vergleich und aufgrund der Differenz entscheidet, ob ein bestimmter Teil-Übertragungskanal decodiert werden kann oder nicht. Die dafür erforderlichen Entscheidungskriterien können dabei auch vom Sender übertragen werden.

Die Erfindung wird im folgenden anhand eines Ausführungsbeispiels näher beschrieben und erläutert. Es zeigt:
- Fig. 1: ein Gleichwellennetz mit den ihm zugeordneten Sendern,
- Fig. 2: ein Sendesignal eines Senders des Gleichwellennetzes,

Im folgenden Ausführungsbeispiel wird davon ausgegangen, daß ein Übertragungskanal in zwei Teil-Übertragungskanäle aufgeteilt wird. Das bedeutet, daß die Übertragungskapazität, die ein Übertragungskanal im gesamten Gleichwellennetz zur Verfügung stellt, in zwei Einheiten unterteilt wird, nämlich die beiden Teil-Übertragungskanäle. Es ist jedoch auch möglich die insgesamt vorhandene Übertragungskapazität des Übertragungsverfahrens in Einheiten beliebiger Größe aufzuteilen.

Die Aufteilung in Teil-Übertragungskanäle kann derart erfolgen, daß in einem ersten Gebiet des Gleichwellennetzes ein erstes Rundfunkprogramm und in einem davon entfernten zweiten Gebiet ein zweites Rundfunkprogramm ausgesendet wird. Dabei wird zwischen den beiden Gebieten Interferenz auftreten, weshalb die Synchronisation des Empfängers durch die Kennung derart gesteuert werden muß, daß im Interferenzgebiet keine Synchronisation auf einen der lokal begrenzten Teil-Übertragungskanäle erfolgt.

Eine weitere Möglichkeit der Aufteilung in Teil-Übertragungskanäle kann durch die Reduktion der von Rundfunkprogrammen benötigten Übertragungskapazität erfolgen. Beispielsweise durch eine Umschaltung auf Mono-Betrieb eines Rundfunkprogramms kann dessen Datenrate halbiert werden, was es ermöglicht in einem Übertragungskanal zwei Mono-Rundfunkprogramme zu übertragen. Weiterhin besteht die Möglichkeit durch Datenreduktion und -kompression die Datenrate eines Rundfunkprogramms zu verringern. Durch die Kennung wird dem Empfänger dann signalisiert, daß nur ein Teil-Übertragungskanal decodiert werden muß, um eines der in dem Übertragungskanal übertragenen Rundfunkprogramme empfangen zu können. Weiterhin besteht die Möglichkeit durch die Steuerung der Decodierung mittels der Kennung nur die Decodierung eines der Teil-Übertragungskanäle zuzulassen.

In den weiteren Ausführungen wird davon ausgegangen, daß die Datenrate zweier Rundfunkprogramme durch Umschaltung auf Mono-Betrieb reduziert wird und jedes Mono-Rundfunkprogramm in einem Teil-Übertragungskanal oder Mono-Übertragungskanal MP1, MP2 übertragen wird. Beide Mono-Übertragungskanäle bilden einen an sich bekannten Übertragungskanal SP2 für ein Stereo-Rundfunksignal.

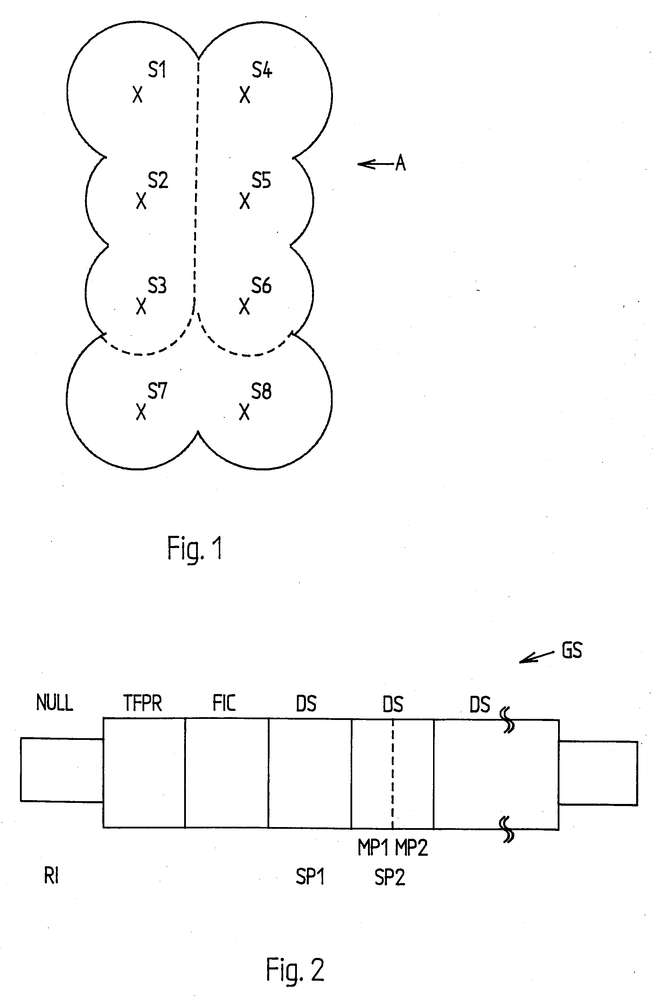

In Fig. 1 ist ein Gleichwellennetz A mit acht Sendern S1 bis S8 dargestellt. Es werden von den Sendern S1 bis S6 im Gleichwellennetz A zusätzlich zu den von allen Sendern S1 bis S8 ausgestrahlten Stereo-Rundfunkprogrammen unterschiedliche lokale Mono-Rundfunkprogramme gesendet.

Von den Sendern S1 bis S3 wird ein erstes lokales Mono-Rundfunkprogramm und von den Sendern S4 bis S6 ein zweites lokales Mono-Rundfunkprogramm gesendet. Die Sender S7 und S8 übertragen kein lokales Rundfunkprogramm. Da die lokalen Rundfunkprogramme nur monofon gesendet werden, benötigen sie auch nur die halbe Übertragungskapazität eines Stereo-Rundfunkprogramms.

Daher besteht die Möglichkeit zwei lokale, Rundfunkprogramme in einem einzigen Übertragungskanal SP2 zu übertragen.

Damit es aufgrund der unterschiedlichen lokalen Rundfunkprogramme nicht zu Störungen, insbesondere Interferenzstörungen, kommt, werden die beiden Mono-Rundfunkprogramme in speziellen Mono-Übertragungskanälen MP1 und MP2 übertragen. Diese weisen die halbe Übertragungskapazität eines Übertragungskanals SP2 auf.

Die Fig. 2 zeigt beispielhaft einen Übertragungsrahmen des Übertragungssignals GS im Gleichwellennetz A. Er beginnt mit dem Nullsymbol NULL, in dem regional unterschiedliche Informationen RI übertragen werden. Diese werden nicht im Gleichwellenbetrieb der Sender, sondern auf bekannte Art und Weise, beispielsweise auf für jeden Sender individuellen Frequenzen übertragen, wie dies aus dem UKW-Rundfunk bekannt ist. Anschließend folgt das Time-Frequency-Phase-Reference-Symbol TFPR. Es wird, wie alle folgenden Symbole des Übertragungsrahmens, im Gleichwellenbetrieb gesendet und dient der Synchronisation des Empfängers. Danach werden im Symbol des Fast-Information-Channel FIC Informationen zur Steuerung des Empfängers bezüglich der Aufteilung der Übertragungskapazität auf die folgenden Datensymbolen DS des Übertragungsrahmens gesendet. Ein erstes Datensymbol DS mit der für ein Stereo-Rundfunkprogramm erforderlichen Übertragungskapazität bildet einen ersten Übertragungskanal SP1. Im folgenden Datensymbol DS werden zwei Mono-Rundfunkprogramme gesendet. Hierfür wird der durch Datensymbole DS gebildete Stereo-Übertragungskanal SP2 in zwei Mono-Übertragungskanäle MP1 und MP2 aufgeteilt. Diese Aufteilung erfolgt dabei vorteilhaft im Frequenzbereich, indem die zur Übertragung im Gleichwellenbetrieb benutzte Bandbreite in mindestens zwei Frequenzblöcke aufgeteilt wird und für jeden Mono-Übertragungskanal MP1 und MP2 mindestens ein derartiger Frequenzblock zur Verfügung steht.

Es kann zusätzlich oder alternativ auch eine Aufteilung im Zeitbereich erfolgen. Durch eine Aufteilung in mehrere Zeit- und/oder Frequenzblöcke kann eine erhöhte Resistenz des Übertragungskanals gegen frequenz- und/oder zeitselektive Störungen erreicht werden.

Um im Empfänger eine schnelle und fehlerfreie Erkennung dieser Aufteilung eines Stereo-Übertragungskanals SP2 in zwei Mono-Übertragungskanäle MP1 und MP2 zu ermöglichen, wird eine Stereo-Mono-Kennung SMK übertragen, an der der Empfänger erkennt, welches Datensymbol DS und damit welcher Übertragungskanal SP in zwei Mono-Übertragungskanäle MP1 und MP2 aufgeteilt wurde.

Dadurch wird im Empfänger, sofern dieser auf den Stereo-Übertragungskanal SP2 synchronisiert ist, automatisch die Decodierung der Empfangsdaten von Stereoauswertung auf Monoauswertung umgeschaltet.

Die Kennung SMK kann dabei beispielsweise im Steuerkanal FIC übertragen werden. Darüber hinaus kann durch den Empfang dieser Kennung SMK im Empfänger die Auswertung der regional unterschiedlichen Information RI, die im Null-Symbol übertragen wird, gestartet werden, über die für jeden Sender individuell dem Empfänger mitgeteilt wird, in welchem der beiden Mono-Übertragungskanäle MP1 oder MP2 das lokale Mono-Rundfunkprogramm empfangen werden kann.

Alternativ kann diese mit den regional unterschiedlichen Informationen RI übertragene Zuweisung des Teil-Übertragungskanals für alle im Gleichwellennetz vorhandenen Teil-Übertragungskanäle auch im Steuerkanal FIC übertragen werden.

Eine weitere Alternative besteht in der Übertragung der Kennung SMK zusammen mit den regional unterschiedlichen Informationen RI im Null-Symbol. Dann kann die Kennung SMK zusätzlich zur Nummer des Stereo-Übertragungskanals SP2, der in zwei Mono-Übertragungskanäle MP1 und MP2 aufgeteilt wurde, auch den Mono-Übertragungskanal MP1 oder MP2 beinhalten, der empfangen werden kann.

Im folgenden wird ein Sender beschrieben, mit dem die Übertragung von lokalen Mono-Rundfunkprogrammen möglich ist. Dieser Sender weist über die von einem Sender für ein Gleichwellennetz bekannten Baugruppen hinaus die folgenden zusätzlichen Baugruppen auf.

Zunächst ist eine Schaltungsanordnung zur Verwürfelung des Mono-Rundfunkprogramms in die dafür vorgesehenen Zeit- und Frequenzblöcke des Mono-Übertragungskanals MP1 oder MP2 des Übertragungssignals GS vorgesehen. Dabei wird das Mono-Rundfunkprogramm zeit- und frequenzgenau für die Einfügung in das Übertragungssignal GS in Daten-Bursts aufgeteilt. Diese können, je nachdem in welcher Frequenzlage die Einfügung erfolgt, im Basisband, einer Zwischenfrequenzlage oder im Sendefrequenzbereich liegen. Gegebenenfalls ist noch ein Mischen des einzufügenden Mono-Rundfunkprogramms in die gewünschte Frequenzlage erforderlich.

Anschließend wird durch eine Einfügungsschaltung das Mono-Rundfunkprogramm in einen Mono-Übertragungskanal MP1 oder MP2 des Sendesignals GS eingefügt. Dies kann sowohl im Basisband, in einer Zwischenfrequenzlage oder auf der Sendefrequenz erfolgen.

Weiterhin wird eine Schaltungsanordnung zur Erzeugung einer Kennung SMK benötigt. Diese Schaltungsanordnung erzeugt eine Information bezüglich des Stereo-Übertragungskanals SP2, der in zwei Mono-Übertragungskanäle MP1 und MP2 aufgeteilt wird. Wird diese Kennung SMK nicht gesendet, erkennt der Empfänger, daß nur Stereo-Rundfunkprogramme übertragen werden. Die Übertragung kann sowohl im Gleichwellenbetrieb über einen Steuerkanal FIC als auch mit den regional unterschiedlichen Informationen RI erfolgen. Bei einer Übertragung mit den regional unterschiedlichen Informationen RI ist jedoch darauf zu achten, daß jeder Sender S1 bis S8 eines Gleichwellennetzes A, in dem lokale Mono-Rundfunkprogramme MP1 und MP2 ausgesendet werden, eine Kennung SMK aussendet. Dies ist erforderlich, damit sich kein Empfänger auf einen Stereo-Übertragungskanal SP2 synchronisiert, der in zwei Mono-Übertragungskanäle MP1 und MP2 aufgeteilt ist, die in der Region, in der sich der Empfänger gerade befindet, unter Umständen nicht zu empfangen sind.

Schließlich ist eine weitere Schaltungsanordnung erforderlich, die für jeden Sender individuell den Mono-Übertragungskanal MP1 oder MP2 codiert, der ausgesendet wird. Auf diesen Mono-Übertragungskanal synchronisiert sich dann der Empfänger. Die Codierung erfolgt dabei gemäß der Codierung der regional unterschiedlichen Information RI, da für jeden Sender des Gleichwellennetzes A in der Regel unterschiedliche Mono-Übertragungskanäle MP1 oder MP2 benutzt werden. Sendet ein Sender S7 oder S8 kein lokales Mono-Rundfunkprogramm, so wird kein derartiger Code übertragen. Alternativ können auch im Steuerkanal FIC für alle im Gleichwellennetz gesendeten regionalen Programme die Zuweisungen des Mono-Übertragungskanals in Abhängigkeit vom Empfangsort erfolgen.

Da auch über die Mono-Übertragungskanäle MP1 und MP2 die Mono-Rundfunkprogramme im Gleichwellenbetrieb übertragen, aber die Mono-Rundfunkprogramme nicht von allen Sendern S1 bis S8 eines Gleichwellennetzes A gesendet werden, ist eine Mehrfach-Nutzung dieser Mono-Übertragungskanäle MP1 und MP2 möglich. Dabei ist darauf zu achten, daß zwei Sender eines Gleichwellennetzes A, die den gleichen Mono-Übertragungskanal benutzen, so weit voneinander entfernt sind, daß sie sich nicht gegenseitig stören.

Die Arbeitsweise und die im Vergleich zu bekannten Gleichwellenempfängern, wie sie beispielsweise aus der DE 42 37 692 C1 bekannt sind, zusätzlichen Baugruppen für einen Empfänger zum Empfang lokaler Mono-Rundfunkprogramme werden im folgenden erläutert.

Zunächst ist im Empfänger eine Baugruppe zur Decodierung und Auswertung der Nennung SMK erforderlich. Wird eine Nennung SMK empfangen, so erkennt die Steuereinheit des Empfängers welcher Stereo-Übertragungskanal SP2 in zwei Mono-Übertragungskanäle MP1 und MP2 aufgeteilt wurde. Dabei kann die Nennung beispielsweise im Steuerkanal FIC oder mit den regional unterschiedlichen Informationen RI übertragen werden. Die Steuereinheit ermittelt anschließend, ob der Empfänger auf diesen Stereo-Übertragungskanal SP2 synchronisiert ist. Ist der Empfänger nicht auf diesen Stereo-Übertragungskanal SP2 synchronisiert, besteht in der weiteren Verfahrensweise kein Unterschied zu einem herkömmlichen Gleichwellenempfänger.

Stellt die Steuereinheit fest, daß der Empfänger auf diesen Stereo-Übertragungskanal SP2 synchronisiert ist, so wird versucht aus den regional übertragenen Informationen RI mit einem Decoder zu decodieren, welcher der beiden Mono-Übertragungskanäle MP1 oder MP2 empfangen werden kann. Gelingt dies nicht, so erkennt die Steuereinheit, daß in dem Gleichwellennetz A zwar lokale Mono-Rundfunkprogramme gesendet werden, aber nicht von dem Sender, der gerade empfangen werden kann. Das heißt, auf dem Stereo-Übertragungskanal SP2 wird, beispielsweise im Empfangsbereich von Sender S7 oder S8, kein Signal übertragen, das eine ausreichende Qualität aufweist. Der Empfänger wird daher von der Steuereinheit entweder stumm geschaltet, oder der Empfänger synchronisiert sich automatisch auf einen anderen Übertragungskanal.

Kann der Empfänger einen Code decodieren, der ihm einen Mono-Übertragungskanal MP1 oder MP2 zuweist, so synchronisiert sich der Empfänger auf diesen und schaltet in einen Mono-Empfangsmodus um, in dem eines der beiden Mono-Rundfunkprogramme ausgegeben wird. Alternativ zur direkten Zuweisung eines der beiden Mono-Übertragungskanäle MP1 oder MP2 durch einen Sender bestehen weitere Möglichkeiten zur Auswahl. Es kann aufgrund der Empfangsfeldstärke auf den beiden, Mono-Übertragungskanälen MP1 und MP2 einer für die Wiedergabe ausgewählt werden, sofern eine Mindestfeldstärke, die für einen guten Empfang erforderlich ist, überschritten wird. Weiterhin kann der Empfänger aufgrund seines geographischen Standorts, sofern er diesen bestimmen kann oder Informationen darüber erhält, ein Mono-Übertragungskanal MP1 oder MP2 auswählen, der von dem am nächsten gelegenen Sender zur Übertragung eines Mono-Rundfunkprogramms benutzt wird. Hierfür ist es erforderlich, daß jeder Sender ein Identifikationssignal oder seinen Standort an den Empfänger überträgt. Dabei darf ein maximaler Abstand zwischen Empfänger und Sender nicht überschritten werden. Anschließend schaltet die Steuereinheit den Empfänger ebenfalls in einen Mono-Empfangsmodus um.

## Patentansprüche

1. Verfahren zur Übertragung von lokalen Rundfunkprogrammen in einem Gleichwellennetz (A), wobei die Rundfunkprogramme nach einem Mehrkanalübertragungsverfahren übertragen werden, bei welchem in Übertragungszeitschlitzen (NULL), die nicht durch ein im Gleichwellenbetrieb ausgesendetes Signal (GS) belegt sind, zusätzliche regional unterschiedliche Informationen (RI) übertragen werden,
**dadurch gekennzeichnet**,
daß ein Übertragungskanal (SP2) im Frequenzbereich und/oder im Zeitbereich in mehrere Teil-Übertragungskanäle (MP1, MP2) aufgeteilt wird, daß über die Teil-Übertragungskanäle (MP1, MP2) unterschiedliche Rundfunkprogramme übertragen werden und daß eine Kennung (SMK) übertragen wird, an welcher der Empfänger erkennt welcher Übertragungskanal (SP2) in Teil-Übertragungskanäle (MP1, MP2) aufgeteilt ist.

2. Verfahren nach Anspruch 1,
**dadurch gekennzeichnet**,
daß Teil-Übertragungskanäle (MP1, MP2) nur von bestimmten Sendern (S1-S3, S4-S6) der im Gleichwellennetz synchronisierten Sender (S1-S8) zur Ausstrahlung eines Rundfunkprogramms benutzt werden, wodurch das Verbreitungsgebiet lokaler Rundfunkprogramme begrenzt wird.

3. Verfahren nach Anspruch 1 oder 2,
**dadurch gekennzeichnet**,
daß die Kennung (SMK) von jedem Sender (S1-S8) im Gleichwellennetz (A) über einen Steuerkanal (FIC) übertragen wird und daß sie eine Information darüber beinhaltet, welcher der Übertragungskanäle (SP1, MP1, MP2) regional unterschiedliche Informationen überträgt.

4. Verfahren nach Anspruch 1 oder 2,
**dadurch gekennzeichnet**,
daß die Kennung (SMK) im Gleichwellenbetrieb übertragen wird und daß zusätzlich mit den regional unterschiedlichen Informationen (RI) übertragen wird, welcher der Teil-Übertragungskanäle (MP1, MP2) regional unterschiedliche Informationen überträgt.

5. Verfahren nach einem der Ansprüche 1 bis 4,
**dadurch gekennzeichnet**,
daß mit den regional unterschiedlichen Informationen (RI) und/oder in einem Steuerkanal (FIC) die Sendefrequenzen weiterer empfangbarer oder benachbarter Gleichwellennetze oder anderer Funknetze übertragen werden, wodurch ein störungsfreier und schneller Wechsel des Programms ermöglicht wird.

6. Verfahren nach einem der Ansprüche 1 bis 5,
**dadurch gekennzeichnet**,
daß die einem Teil-Übertragungskanal (MP1, MP2) zugeordnete Übertragungszeitschlitzbreite zeitlich und die Übertragungsbandbreite in der Frequenz verwürfelt sind, wodurch eine erhöhte Störresistenz erreicht wird.

7. Sender zur Übertragung von lokalen Rundfunkprogrammen in einem Gleichwellennetz (A), wobei die Rundfunkprogramme nach einem Mehrkanalübertragungsverfahren übertragen werden, welcher eine Schaltungsanordnung zum Senden regional unterschiedlicher Informationen (RI) aufweist, welche in Übertragungszeitschlitzen (NULL), die nicht durch ein im Gleichwellenbetrieb ausgesendetes Signal (GS) belegt sind, gesendet werden,
**dadurch gekennzeichnet**,
daß ein Multiplexer das einzufügende Rundfunkprogramm im Frequenzbereich und/oder Zeitbereich verwürfelt, wodurch ein Teil-Übertragungskanal (MP1, MP2) gebildet wird, daß eine Schaltungsanordnung dieses Signal in einen Übertragungskanal (SP2) des im Gleichwellenbetrieb ausgesendeten Signals (GS) einfügt und daß eine Schaltungsanordnung eine Kennung (SMK) erzeugt, welche eine Information über den dafür benutzten Übertragungskanal (SP2) beinhaltet, der in Teil-Übertragungskanäle (MP1, MP2) aufgeteilt wurde.

8. Sender nach Anspruch 7,
**dadurch gekennzeichnet**,
daß eine Schaltungsanordnung eine Information erzeugt, welche die Synchronisation des Empfängers so steuert, daß ein bestimmter Teil-Übertragungskanal (MP1, MP2) empfangen wird und daß eine Schaltungsanordnung diese Information im Sender in den Steuerkanal (FIC) einfügt.

9. Verfahren zum Empfang lokaler Rundfunkprogramme, welche in einem Gleichwellennetz (A) nach einem Mehrkanalübertragungsverfahren übertragen werden, bei welchem in Übertragungszeitschlitzen (NULL), die nicht durch das, im Gleichwellenbetrieb ausgesendete Signal (GS) belegt sind, zusätzliche regional unterschiedliche Informationen (RI) übertragen werden,
**dadurch gekennzeichnet**,
daß beim Empfang einer Kennung (SMK) bezüglich einer Aufteilung eines Übertragungskanals (SP2) in Teil-Übertragungskanäle (MP1, MP2) in Abhängigkeit vom empfangenen Übertragungskanal im Empfänger eine Umschaltung der Decodierung auf einen Teil-Übertragungskanal (MP1, MP2) erfolgt und daß in Abhängigkeit von einer im Steuerkanal (FIC) übertragenen Information oder einer Senderidentifikation und dem Standort des Empfängers oder der Empfangsqualität sich der Empfänger auf einen der beiden Teil-Übertragungskanäle (MP1, MP2) synchronisiert.

10. Empfänger zum Empfang lokaler Rundfunkprogramme, welche in einem Gleichwellennetz (A) nach einem Mehrkanalübertragungsverfahren übertragen werden, welcher eine Schaltungsanordnung zur Auswertung regional unterschiedlicher Informationen (RI) aufweist, welche in Übertragungszeitschlitzen (NULL), die nicht durch das im Gleichwellenbetrieb ausgesendete Signal (GS) belegt sind, übertragen werden,
**dadurch gekennzeichnet**,
daß eine Steuereinheit eine Kennung (SMK) bezüglich einer Aufteilung eines Übertragungskanals (SP2) in zwei Teil-Übertragungskanäle (MP1, MP2) auswertet und daß die Schaltung zur Empfängersynchronisation sich auf einen Teil-Übertragungskanal (MP1, MP2) synchronisiert.

11. Empfänger nach Anspruch 10,
**dadurch gekennzeichnet**,
daß die Steuereinheit weitere Informationen der Kennung (SMK) auswertet, die den Übertragungskanal (SP2) betreffen, auf den der Empfänger synchronisiert ist, daß die Steuereinheit die Synchronisation des Empfängers auf den Teil-Übertragungskanal (MP1, MP2) steuert, welcher dem Empfänger mittels der im Steuerkanal (FIC) vom Sender übertragenen Informationen zugewiesen wurde, oder daß eine Schaltungsanordnung die Übertragungsqualität der beiden Teil-Übertragungskanäle (MP1, MP2) ermittelt und die Steuereinheit diese als Kriterium zur Synchronisation des Empfängers auf einen der beiden Teil-Übertragungskanäle (MP1, MP2) benutzt, oder daß die, Steuereinheit auf bekannte Art und Weise den Empfängerstandort bestimmt und in Abhängigkeit von einer mit den regional unterschiedlichen Informationen (RI) übertragenen Senderidentifikation einen Teil-Übertragungskanal (MP1, MP2) auswählt und daß die Steuereinheit den Empfänger auf diesen Teil-Übertragungskanal umschaltet.

12. Empfänger nach Anspruch 10 oder 11,
**dadurch gekennzeichnet**,
daß ein Demultiplexer eine im Sender durchgeführte Verwürfelung im Zeitbereich und/oder Frequenzbereich rückgängig macht.
